Europäisches Patentamt

European Patent Office

Office européen des brevets

(19)

(11) Numéro de publication : **0 456 594 A1**

# (12) DEMANDE DE BREVET EUROPEEN

(21) Numéro de dépôt : **91480077.6**

(22) Date de dépôt : **06.05.91**

(51) Int. Cl.⁵ : **A21B 1/40, F24B 5/08**

(30) Priorité : **07.05.90 FR 9005967**

(43) Date de publication de la demande :
**13.11.91 Bulletin 91/46**

(84) Etats contractants désignés :
**AT BE CH DE DK ES GB GR IT LI LU NL SE**

(71) Demandeur : **Rousselle, Jean-Claude**
**Chemin du Colombier**
**F-83460 Les Arcs/Argens (FR)**

(72) Inventeur : **Rousselle, Jean-Claude**
**Chemin du Colombier**
**F-83460 Les Arcs/Argens (FR)**

(74) Mandataire : **Bossard, Jacques-René**
**Cabinet MEYER & COURTASSOL Bureau**
**EUROPE 20 Place des Halles**
**F-67000 Strasbourg (FR)**

(54) **Procédé pour la régulation du chauffage des fours à bois.**

(57)    Installation pour la cuisson contrôlée des produits de boulangerie, pâtisserie et analogues, caractérisée en ce que, l'apport calorifique provenant de gaz de combustion chauds d'un foyer à bois, des moyens sont prévus pour canaliser ces gaz de combustion selon un programme déterminé en fonction des produits à cuire, respectivement dans des proportions déterminées à chaque instant, vers la sole de cuisson et vers la voûte du four.

EP 0 456 594 A1

FIG.1

→ : Fumées      ⊳ : Chauffe par rayonnement

La présente invention concerne les fours utilisés pour la cuisson des produits de boulangerie, pâtisserie et analogues, tels que les fours à pizza, et vise plus spécialement les fours dans lesquels l'apport calorifique provient de gaz de combustion (fumées) d'un foyer à bois.

Il est bien connu que pour obtenir des produits de ce genre, présentant les meilleures qualités de croûte, de texture interne, de couleur et analogues, les modalités de la cuisson doivent être soigneusement contrôlées. Ainsi, dans le cas du pain, on lit dans R. CALVEL, "La Boulangerie Moderne", page 220 à 221 :

"Il est à remarquer que le pâton se développe beaucoup plus en hauteur qu'en largeur. Cela vient sans nul doute de ce que la partie du pâton qui est en contact avec la sole perd toute souplesse et durcit la première, interdisant, sur ce plan, très rapidement à la pâte toute possibilité d'élargissement.

Lors de la deuxième phase, l'action de la chaleur ne provoque plus guère que la dessication de la surface du pâton en contact avec elle, dessication qui aboutit à la formation de la croûte et, après un temps donné, à la cuisson du pain".

...

"Le degré de la température du four peut avoir, compte non tenu des autres éléments qui y participent, une très grande influence sur l'aspect extérieur et intérieur du pain, ainsi que sur le rendement. Aussi la régularité de l'état du four avec la possibilité d'adapter parfois la chaleur de celui-ci aux caractéristiques de la pâte contribue beaucoup à l'aboutissement d'une fabrication suivie et de qualité".

...

"Si le four est trop chaud, la pâte violemment « saisie » devient rapidement inextensible, et les pains, de ce fait, sont mal développés, ils paraissent lourds ; les coups de lame jettent irrégulièrement , parfois même ne jettent pas du tout. La croûte se colore rapidement et risque de noircir. Il en est de même du dessous des pains qui va parfois jusqu'à « ferrer ». Intérieurement, la mie est serrée. Parallèlement, le pain étant toujours en ce cas défourné plus ou moins prématurément, le rendement augmente alors sensiblement.

A l'opposé, lorsque le four est trop doux, les pâtons s'élargissent plus que de normale et les pains qui en résultent sont toujours un peu plats. Les coups de lame jettent, mais se déchirent. La croûte conserve une couleur pâle".

Or traditionnellement, le contrôle de la combustion du bois n'est effectué que par le réglage manuel du tirage, ce qui ne peut procurer qu'une température du four qui n'est pas uniforme et qui est imprécise, donc des produits de qualité irrégulière.

Au contraire, l'installation selon l'invention vise à obtenir des produits ayant une cuisson parfaite, sur le dessus, le dessous et à coeur et cela dans tout le volume du four.

A cet effet, l'installation selon l'invention permet d'apporter des calories à la voûte ou à la sole selon les besoins, par un jeu de clapets et de ventilateurs qui conduit à augmenter ou diminuer la température du four selon les zones de celui-ci , en dirigeant les calories à la convenance de l'utilisateur.

Le réglage desdits clapets est assuré par des vérins électriques ou des moto-réducteurs, commandés de préférence par des programmateurs numériques.

Il serait possible également d'opérer les réglages manuellement, mais un tel réglage serait extrêment complexe, notamment dans le cas des fours à sole tournante.

L'invention vise donc essentiellement une installation pour la cuisson contrôlée des produits de boulangerie, pâtisserie et analogues, cette installation ayant pour caractéristique essentielle l'apport calorifique provenant de gaz de combustion chaud d'un foyer à bois, que des moyens sont prévus pour canaliser ces gaz de combustion, selon un programme déterminé en fonction des produits à cuire, respectivement selon des proportions également déterminées, vers la sole de cuisson et vers la voûte du four.

Dans la pratique, ces moyens consistent en des clapets commandant à chaque instant lesdites proportions, en fonction de températures palpées au niveau de la sole, de la voûte et de la conduite d'évacuation desdits gaz ; au surplus des moyens additionnels sont prévus pour provoquer le refroidissement de la sole ou le refroidissement de l'ensemble du four, ces moyens consistant essentiellement en un ventilateur aspirant de l'air froid au-dessus de la voûte pour le refouler vers le dessous de la sole et vers la porte du four, la commande de ce ventilateur et de sa vitesse de refoulement étant déclenchée par un moyen de palpage de la température à l'intérieur du four.

Dans la mise en pratique de l'invention, l'installation comporte donc des moyens de palpage de la température constitués de préférence par des thermostats localisés au niveau de la sole, au niveau de la voûte et au niveau de l'évacuation des gaz de combustion, lesdits thermostats étant connectés par des circuits électroniques déclenchant, suivant un programme déterminé, l'ouverture de clapets localisés de manière à canaliser les gaz vers la sole, vers la voûte et/ou vers l'extérieur, dans des proportions définies à la fois par la température des gaz dans chaque zone et par le cycle de cuisson des produits, ainsi que la mise en marche du ventilateur de refoulement d'air froid et sa vitesse, en vue du refroidissement du four.

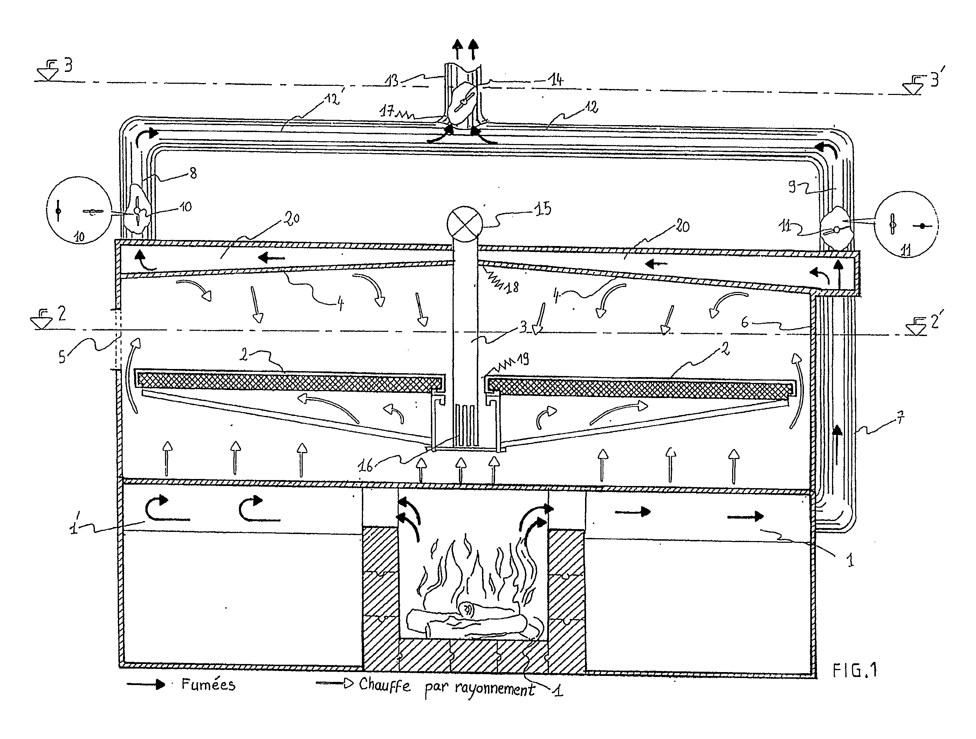

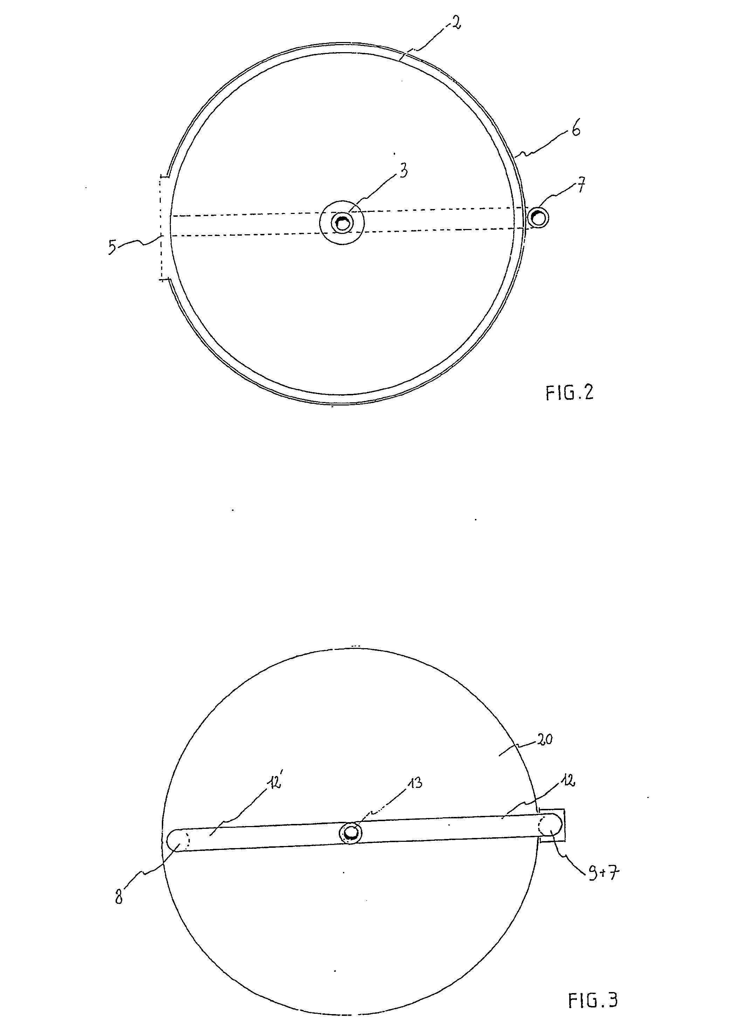

On va maintenant décrire l'invention plus en détail en se référant à un mode de réalisation particulier donné à titre d'exemple non limitatif et illustré par le dessin annexé sur lequel la figure 1 est une coupe axiale verticale d'un four à sole selon l'invention et les figures 2 et 3 sont des coupes horizontales par 2.2 et 3.3 respectivement de la figure 1.

Sur ce dessin, on a désigné par la référence générale 1 un foyer destiné à servir de source de calories, par combustion de bûches de bois, comme il est d'usage dans les fours à bois.

Les gaz de combustion provenant de ce foyer passent dans une zone de détente, designée par la référence 1', occupant toute la partie inférieure du four, d'où ils sont ensuite acheminés vers le haut, de manière à chauffer par rayonnement une sole circulaire tournante 2 entraînée par un axe creux vertical 3, à partir d'un moteur non représenté.

Cette sole tournante est logée dans le four proprement dit délimité à sa partie supérieure par une voûte légèrement cônique 4 et, à sa partie latérale, par un caisson cylindrique 6, comportant une porte 5.

L'ensemble est monté dans un bâti 7, duquel partent aux deux extrêmités deux conduits verticaux 8 et 9 dans lesquels sont montés des clapets 10 et 11.

Ces conduits verticaux 8 et 9 sont réunis, par un conduit horizontal 12, à la cheminée d'évacuation des gaz 13. Un troisième clapet 14 est monté dans ce conduit 13 de manière à régler le tirage général de l'installation. A la partie supérieure du tube creux 3 est monté un ventilateur 15, destiné à aspirer de l'air froid à l'extérieur et à le refouler au dessous de la sole par des fentes 16. Un premier thermostat 17 est logé dans le conduit 13 pour palper la température des gaz de sortie, un second thermostat 18 est monté au sommet de la voûte 4 et un troisième thermostat 19 est monté sur la sole 2.

Les indications fournies par ces thermostats sont transmises à une unité de programmation de l'ouverture et de la fermeture des trois clapets 10, 11 et 14.

Le fonctionnement de l'installation est alors le suivant :

Le clapet 11 étant ouvert et le clapet 10 étant fermé, les gaz de combustion sont évacués par le conduit 12 et l'évacuation 13 suivant un degré de tirage déterminé par le clapet 14. Dans ce cas, c'est la sole qui est principalement chauffée, par rayonnement.

Quand, au contraire, le clapet 11 est fermé et le clapet 10 est ouvert, les gaz ne peuvent plus passer par le conduit 12, mais passent au contraire par l'espace 20 - 20' situé au dessus de la voûte 4, puis sont acheminés par le conduit 12' vers l'évacuation 13.

Dans ce cas, c'est la voûte qui est préférentiellement chauffée.

Selon le programme de cuisson prévu pour un type de produits déterminé, l'ouverture respective des clapets 10, 11 et 14 est réglé à chaque instant en fonction des températures palpées par les trois thermostats 17, 18 et 19, de manière que la température de la sole et la température de la voûte soient constamment optimales pour ledit type de produit à chaque moment déterminé de sa cuisson.

Par ailleurs, afin d'obtenir un refroidissement de la sole 2 avec précision, le thermocouple 19 détermine la mise en route du ventilateur 15, qui aspire de l'air à l'extérieur et le refoule dans l'axe creux 3 débouchant en 16. Cet air froid refroidit donc la sole et est ensuite évacue par la porte 5.

Si l'on fait tourner le ventilateur 15 à plus grande vitesse, alors par effet de venturi, l'air aspiré fera tomber très rapidement toute la température du four.

On dispose donc d'un double moyen de réglage de la température du four et de ses différentes zones, d'une part, par la distribution appropriée des gaz de combustion chauds et, d'autre part, par l'envoi approprié d'air froid.

Cette répartition et ce réglage des températures peut être fait avec le maximum de précision à chaque moment, grâce au programmateur numérique intégré à l'appareil.

**Revendications**

1 - Installation pour la cuisson contrôlée des produits de boulangerie, pâtisserie et analogues, caractérisée en ce que, l'apport calorifique provenant de gaz de combustion chauds d'un foyer à bois, des moyens sont prévus pour canaliser ces gaz de combustion selon un programme déterminé en fonction des produits à cuire, respectivement dans des proportions déterminées à chaque instant, vers la sole de cuisson et vers la voûte du four.

2 - Installation selon la revendication 1 caractérisée en ce que ces moyens consistent en des clapets commandant à chaque instant lesdites proportions, en fonction des températures palpées au niveau de la sole, de la voûte et du conduit d'évacuation des gaz de combustion.

3 - Installation selon les revendications 1 et 2 caractérisée en ce que des moyens additionnels sont prévus pour déterminer également le refroidissement de la sole ou le refroidissement de l'ensemble du four en fonction des besoins.

4 - Installation selon la revendication 3 caractérisée en ce que ces moyens consistent en un ventilateur aspirant de l'air froid au dessus de la voûte pour le refouler vers la sole et vers la porte du four, la commande de ce ventilateur et de sa vitesse de refoulement étant déterminée par un moyen de palpage de la température de l'intérieur du four et plus spécialement de la sole.

5 - Installation selon l'une quelconque des revendications 1 à 4, caractérisée en ce que lesdits moyens de palpage de la température sont des thermostats localisés au niveau de la sole, au niveau de la voûte et au niveau de l'évacuation des gaz de combustion, lesdits thermostats étant connectés par des circuits électroniques déclenchant, suivant un programme numérique déterminé, l'ouverture de clapets localisés de manière à canaliser les gaz vers la sole, vers la voûte ou vers l'extérieur, dans une proportion définie à la fois par la température des gaz dans chaque zone et par le cycle de cuisson des produits, ainsi que la mise en marche du ventilateur de refoulement d'air froid et sa vitesse en vue du refroidissement du four.

FIG.1

→ Fumées ⇨ Chauffe par rayonnement

EP 0 456 594 A1

FIG.2

FIG.3

Office européen
des brevets

# RAPPORT DE RECHERCHE EUROPEENNE

Numero de la demande

EP    91 48 0077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1289979 (LLOPIS VILATELLA)<br>* le document en entier * | 1 | A21B1/40<br>F24B5/08 |
| A |  | 2 | |
| A | FR-A-1175501 (CIAN)<br>* le document en entier * | 1, 2 | |
| A | DE-A-2829910 (MAUERMANN)<br>* page 9, alinéa 5 – page 10, alinéa 3; figures 1, 2 * | 1 | |
| | | | **DOMAINES TECHNIQUES RECHERCHES (Int. Cl.5)**<br><br>A21B<br>F24B<br>F23N |

Le présent rapport a été établi pour toutes les revendications

| Lieu de la recherche | Date d'achèvement de la recherche | Examinateur |
|---|---|---|
| LA HAYE | 14 AOUT 1991 | VANHEUSDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0403)